# EUROPEAN PATENT APPLICATION

(11) **EP 4 576 835 A1**
(43) Date of publication of application: **25.06.2025**
(21) Application number: 24221827.9
(22) Date of filing: 19.12.2024
(51) Int. Cl.: H04S 7/00, H04R 3/04, H04R 29/00, G10L 25/60

(54) **AUTOMATIC AUDIO TUNING SYSTEM**

(30) Priority: 19.12.2023 DE 102023135886
(71) Applicant: Harman Becker Automotive Systems GmbH, 76307 Karlsbad (DE)
(72) Inventor: MENG, Fanyu, 85764 Oberschleissheim (DE); OATES, Christopher, 96052 Bamberg (DE); VON DEM KNESEBECK, Adrian, 81373 Munich (DE); VON TÜRCKHEIM, Friedrich, 22587 Hamburg (DE); KREJCI, Philipp Maximilian, 76275 Etllingen (DE)
(74) Representative: Rummler, Felix

(57) **Abstract**

According to an aspect of the present disclosure, there is provided an automatic audio tuning system, the system including: a measurement engine to obtain first measurements of one or more parameters associated with an audio signal from one or more loudspeakers; an automatic tuning engine to receive the first measurements and to generate a tuning signal based on the first measurements; a signal flow integration engine to receive the tuning parameters and to generate one or more components of a signal flow, wherein each of the one or more components of the signal flow represents an audio parameter that is tuneable based on the tuning signal; an audio signal processing engine to the one or more components of the signal flow and to generate a playback audio signal based on the one or more components of the signal flow; and an evaluation engine to enable an evaluation of the playback audio signal.

## Description

### TECHNICAL FIELD

The present invention generally relates to an automated audio tuning system. More particularly, the invention relates to an automated audio tuning system that can be used to optimize the sound output of a plurality of loudspeakers in an audio system based on measurements of the sound output and user input. The invention can be employed in multimedia systems having loudspeakers, for example in a vehicle.

### BACKGROUND OF THE INVENTION

Multimedia systems, such as vehicle audio/video systems, home theatre systems and home audio systems are well known. Such systems typically include multiple components that include a sound processor driving loudspeakers with amplified audio signals. Multimedia systems may be installed in various configurations with different components. In addition, such multimedia systems may be installed in listening spaces of different sizes, shapes and configurations. The components of a multimedia system, the configuration of the components and the listening space in which the system is installed all may have significant impact on the audio sound produced.

Once installed in a listening space, a system may be tuned to produce a desirable sound field within the space. Tuning may include adjusting the equalization, delay, and gains to compensate for the equipment and the listening space. Automatic sound field equalization is a well-known technology that contributes to a balanced listening experience, which is widely desired in the fields of vehicles, home theatres and studios. During the process of sound field equalization, or tuning as a commonly used equivalent term, measurement data needs to be collected as the input of tuning, with evaluation as another key requirement to validate the tuning results. However, known tuning tools do not provide a complete chain of automatic tuning functionalities. The present invention aims to address this need and to provide an improved automatic audio tuning system.

### SUMMARY OF THE INVENTION

According to the present disclosure, there is provided an end-to-end tool for automatic sound field equalization. A typical application of automatic sound field equalization is in vehicles.

The present disclosure focuses on the application in vehicles. Nevertheless, the present disclosure is also applicable in other environments, e.g., rooms containing a studio or home theatre or audio systems.

The present disclosure provides an automatic audio tuning system, the system including: a measurement engine to obtain first measurements of one or more parameters associated with an audio signal from one or more loudspeakers; an automatic tuning engine to receive the first measurements and to generate tuning parameters based on the first measurements; a signal flow integration engine to receive the tuning parameters and to generate one or more components of a signal flow, wherein each of the one or more components of the signal flow represents an audio parameter that is tuneable based on the tuning parameters; an audio signal processing engine to receive the one or more components of the signal flow, and to generate a playback audio signal based on the one or more components of the signal flow; and an evaluation engine to enable an evaluation of the playback audio signal.

In an embodiment, the evaluation engine is configured to obtain second measurements based on the playback audio signal based on the one or more components of the signal flow, and/or the evaluation engine is configured to enable subjective listening on the playback audio signal based on the one or more components of the signal flow. Based on the objective and/or subjective evaluation results, the user decides to re-tune or go to fine tuning.

In another embodiment, the system includes a user interface configured to enable a user to adjust one or more tuning parameters, wherein the signal flow integration engine is configured to adjust said one or more components of the signal flow based on the user-adjusted tuning parameters.

Accordingly, the disclosed system implements a complete chain of tuning functions, starting from a measurement of impulse responses of all loudspeakers, automatic tuning, integration into an overall audio processing architecture, also called audio signal flow, to subjective and objective evaluation and subsequent manual fine-tuning. Based on the measured impulse responses and tuning configurations, tuning parameters may be generated. A user can decide whether to re-tune by reconfiguring the system or proceeding to fine-tuning, based on either subjective or objective validation.

The present disclosure enables performing a baseline tuning, e.g., tuning/adjusting of equalization filters, time and gain alignment, with less experience, expertise, time and costs than conventional systems. In particular, the present disclosure provides an end-to-end tool that enables automating the process of tuning, thereby accelerating the tuning process and saving time to focus on subjective refinement on top of the baseline tuning. Also, the disclosed system enables controlling any number of parameters/variables, thereby achieving a balanced listening experience across the seats in a car, for example. Further, the disclosed system enables making the tuning more objective and thus more uniform across different cars or environments.

The system may be implemented by hardware or software or a combination thereof. For example, the system may be implemented by instructions executable on a computer. In an embodiment, the system is implemented in an automotive vehicle. In particular, the system may be connected to or form part of an in-vehicle audio system.

The present disclosure also provides a method for tuning an audio signal, the method including: measuring one or more parameters associated with an audio signal from one or more loudspeakers; generating tuning parameters based on the measured parameters; generating one or more components of a signal flow, wherein each of the one or more components of the signal flow represents an audio parameter that is tuneable based on the tuning parameters; generating a playback audio signal based on the one or more components of the signal flow; and evaluating the playback audio signal and, optionally, adjusting the tuning parameters based on the evaluation (re-tuning), or go to fine tuning. From fine tuning the user can also go to re-tuning. The method may include any of the features and functionalities that are described herein in connection with the system.

### BRIEF DESCRIPTION OF THE DRAWINGS

The features, objects, and advantages of the present disclosure will become more apparent from the detailed description set forth below in conjunction with the drawings, in which:
Figure 1 schematically illustrates the components and workflow of a system according to an embodiment of the present disclosure;
Figure 2 schematically illustrates a measurement operation by a system according to an embodiment of the present disclosure;
Figure 3 illustrates a user interface of a system according to an embodiment of the present disclosure including a speaker configuration and measurement parameters;
Figure 4 schematically illustrates an automatic tuning procedure by a system according to an embodiment of the present disclosure;
Figure 5 illustrates a user interface for controlling an automatic tuning procedure by a system according to an embodiment of the present disclosure;
Figure 6 shows a measured response of an audio system and a target curve for an automatic tuning procedure by a system according to an embodiment of the present disclosure;
Figure 7 shows a tuned response of the audio system and the target curve of Figure 6;
Figure 8 illustrates a signal flow with audio components corresponding to filter (biquad in this case), delay and gain generated by a system according to an embodiment of the present disclosure;
Figure 9 illustrates a biquad audio component in a user interface of a system according to an embodiment of the present disclosure;
Figure 10 illustrates a delay audio component in a user interface of a system according to an embodiment of the present disclosure; and
Figure 11 illustrates a gain audio component in a user interface of a system according to an embodiment of the present disclosure.

### DESCRIPTION OF EXEMPLARY EMBODIMENTS

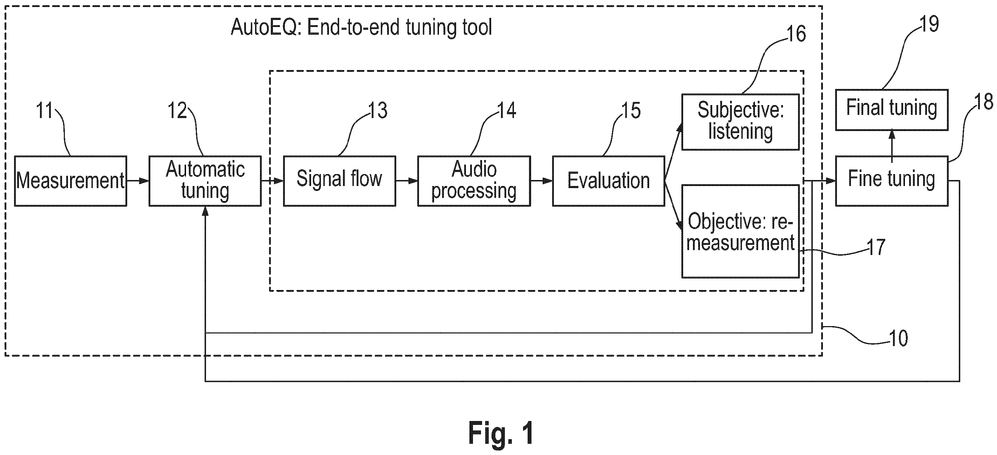

The present disclosure describes a system that provides a platform for automatically tuning an audio system. The system implements a complete tuning chain, including measurement, auto-tuning, signal flow integration, audio processing and evaluation. Figure 1 illustrates such system 10 in accordance with an embodiment of the present disclosure. The system 10 includes a measurement engine 11 for measuring one or more audio parameters, e.g., impulse responses of one or more loudspeakers of an audio system (not shown). The audio parameters are transmitted to an automatic tuning engine 12 which generates tuning parameters based on the measurements by the measurement engine 11. The tuning parameters are transmitted to a signal flow engine 13. The signal flow engine 13 generates one or more components of an audio signal flow, wherein each of the one or more components represents an audio parameter that is tuneable based on the tuning parameters. The output of the audio processing engine 14. The audio processing engine 14 generates a playback audio signal based on the one or more components of the signal flow. The output of the audio processing engine 14 can be evaluated by an evaluation engine 15. The evaluation engine 15 enables a user to evaluate the tuning results by "subjective" listening (element 16) or "objective" re-measurement (element 17). Based on the outcome of the subjective listening 16 and/or the measurement 17, the user can decide to go back to automatic tuning, as illustrated by the arrow to the automatic tuning engine 12. Instead of going back to automatic tuning, the user can directly go to fine-tuning via a fine-tuning module 18. The fine-tuning module 18 enables a further adjustment of the tuning parameters. The fine-tuning too can be automated, based on a measurement feedback loop, and/or it can include adjustments that a user can make through a user interface of the system. Based on the fine-tuning results, the user can loop back to automatic tuning for re-tuning, until satisfying results are obtained, as illustrated by the arrow from the fine-tuning module 18 to the automatic tuning engine 12.

In the following, the elements of a system according to an embodiment of the present disclosure, as illustrated in Figure 1, will be described in more detail.

### Measurement

The measurement engine 11 enables different types of measurements, e.g., impulse response measurements, total harmonic distortion (THD) measurements, phase and frequency measurements, signal-to-noise ratio (SNR) measurements, polarity measurements, etc., and directly feeds the measurement data into the automatic tuning engine 12. The measurements can relate to various loudspeaker types and configurations. The measurements can be performed by different types and configurations of microphones or microphone arrays. The loudspeaker and/or the microphone layouts can be configured by a user through a user interface of the system.

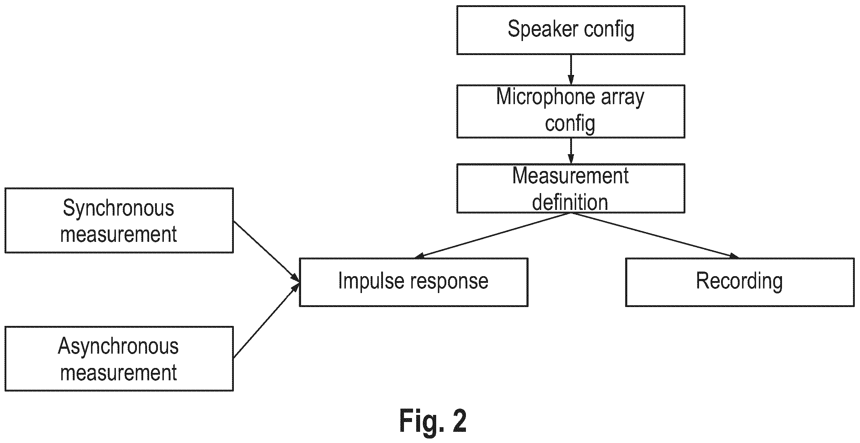

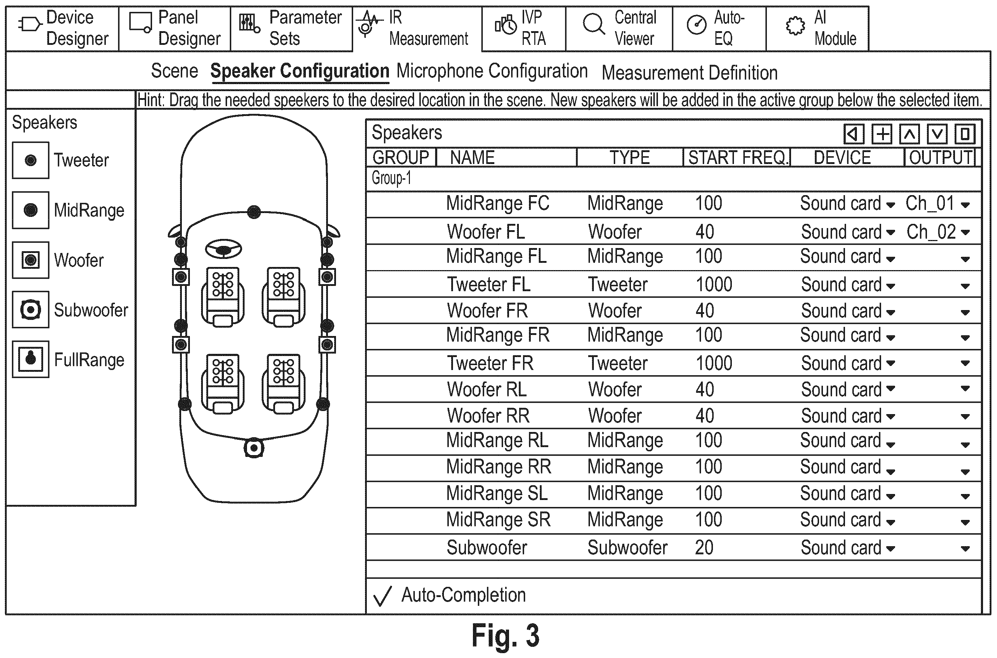

Figure 2 shows an exemplary flow chart of the steps taken by the measurement engine 11 according to an embodiment of the present disclosure. Figure 3 illustrates an exemplary use case relating to a car audio system with a subwoofer, woofers, midrange and tweeters speakers, wherein the measurements are made with a microphone array across four seats. The loudspeaker configuration is shown on the left-hand side of Figure 3.

### Automatic Tuning

The system according to embodiments of the present disclosure includes a user interface to enable a user to define targets, for example spectral and temporal behaviors, sound stage, spatial balancing, immersiveness and sound depth. The user interface enables the user to configure parameters to achieve the desired target behavior. A backend algorithm, also referred to as "solver", processes the targets and the user defined configurations to obtain filter parameters, gains and delays as a tuning output. The solver may have a modular, extendible architecture, thereby enabling an expansion of the targets and configurations for different application scenarios. For example, by adding different use cases and tuning modes, various users' or customers' preferences can be implemented.

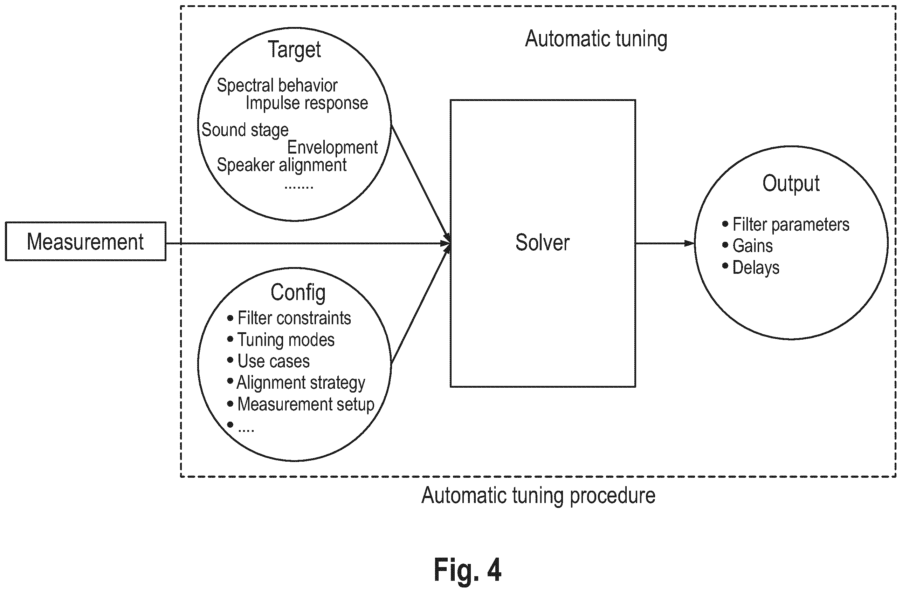

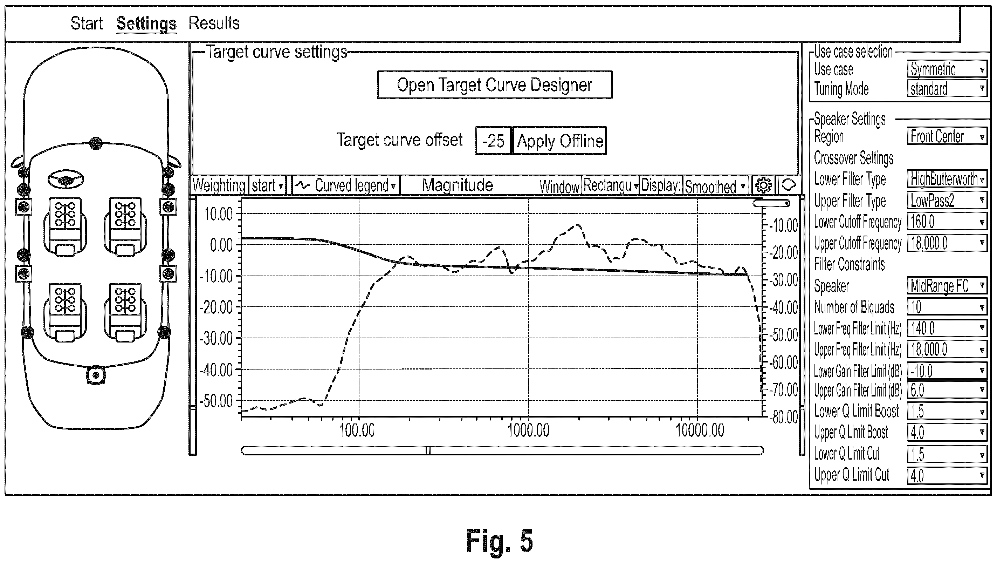

Figure 4 illustrates examples of user-defined requirements and configurations included in the automatic tuning process. Figure 5 illustrates a configuration panel (user interface) of the automatic tuning engine 12, including a loudspeaker architecture, microphone selection, target curve definition, speaker and filter configurations and graphs of target curve and measurement responses.

Systems according to embodiments of the present disclosure may include one or more of the following features:
User defined target tuning curve: The user can define a target curve in the frequency domain through a user interface of the system. The target curve may represent a preferred listening experience. The measured responses of loudspeakers are tuned to achieve or approximate the target curve. The responses can be equalized by digital audio filters, e.g.IIR biquad filters or FIR filters, delays and gains, for example.
Balancing between seats: In an in-vehicle audio system, a microphone array used for measurement and tuning may be configured through a user interface. The configuration may include a selection and weighting of microphones, thereby to enable a user to decide which seat to focus on, and how much weighting to give each seat in a configuration of multiple seats.
Delay calculation: The automatic tuning engine 12 may include a delay detection scheme using impulse responses. Thereby, the loudspeaker with the longest delay may be selected as a reference loudspeaker. The other loudspeakers may be aligned with the reference loudspeaker with user-defined delay offsets.
Flexible grouping for gain alignment: The automatic tuning engine 12 may be configured to perform gain alignment towards the target curve among loudspeakers within a region within a room or car, for example, or among regions within the room or car. To align regions, groups of loudspeakers can be flexibly configured, and relative level offsets can be defined.
Multiple and extendable use cases and tuning modes: To have a balanced tuning of left and right loudspeakers, for example, a symmetric use case can be defined to combine left and right paired loudspeaker signals for tuning. Taking car as example, front speakers use the measurements of the microphone array placed on the driver seat, and rear speakers use the measurements of the microphone array on the rear right seat, and subwoofer uses both microphone arrays. An asymmetric use case with different "focus seats" as a different tuning mode is also available. In the asymmetric use case, the measurement data for one selected seat and one speaker only is used for further processing/tuning. For example, a "driver" tuning mode only uses data from microphones that arranged on or near a driver's seat. The different use cases and the selection of "focus seats" can be entered through a user interface of the automatic tuning engine 12, for example.
Nonlinear multivariable optimizer: The automatic tuning engine 12 may include an optimizer to provide optimized filter parameters to equalize the measured response with respect to the target curve. The optimizer is constrained by multiple boundaries, e.g., a quality factor, frequency and gain, thereby to shape the filters to make the tuned measurement responses to achieve the target. The filter parameters can be converted to coefficients to be easily deployed in the signal flow.

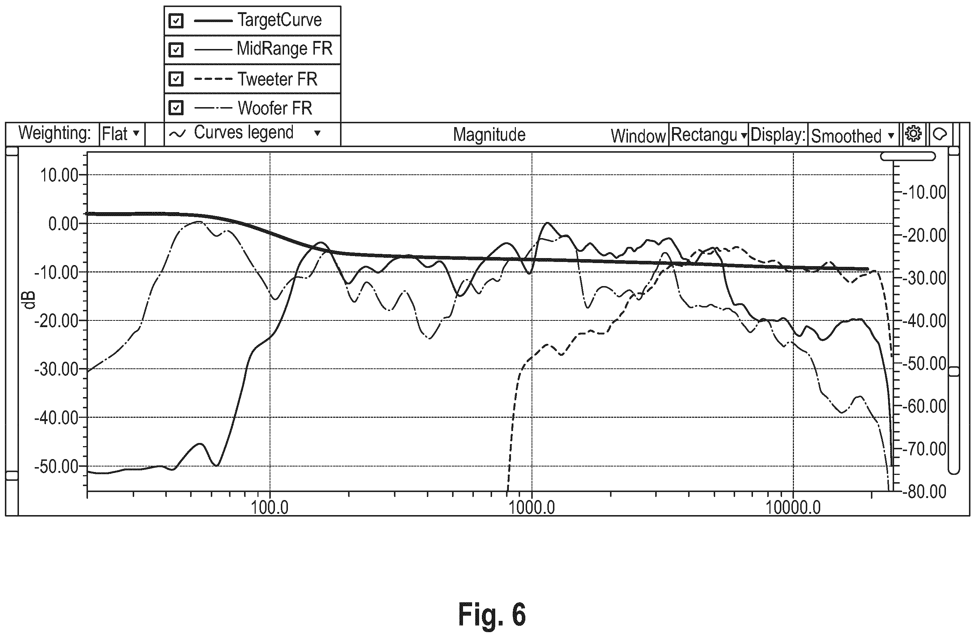

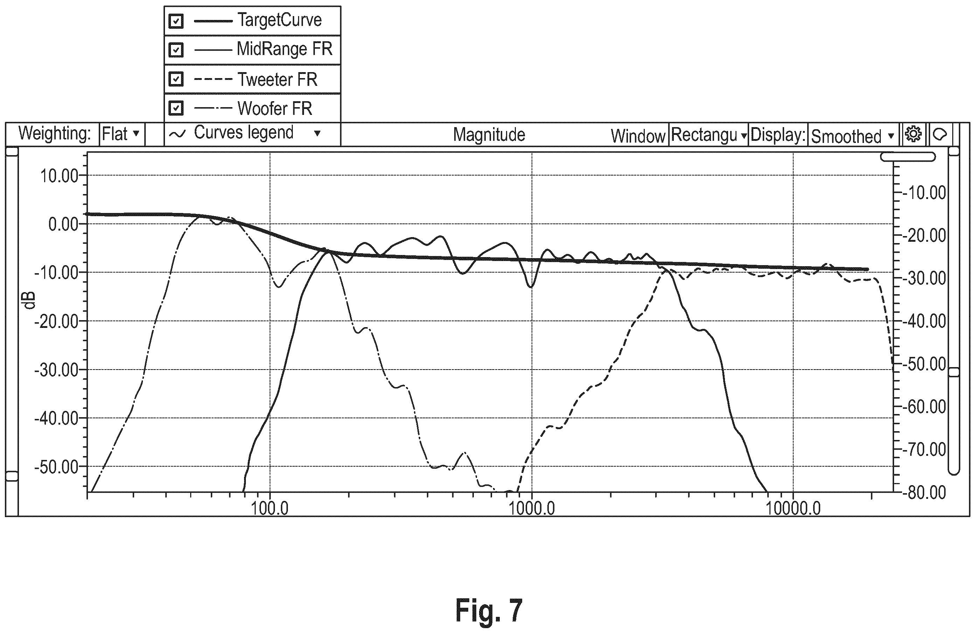

Figure 6 and Figure 7 illustrate responses before and after tuning, respectively, versus a user defined target curve.

### Signal Flow Integration

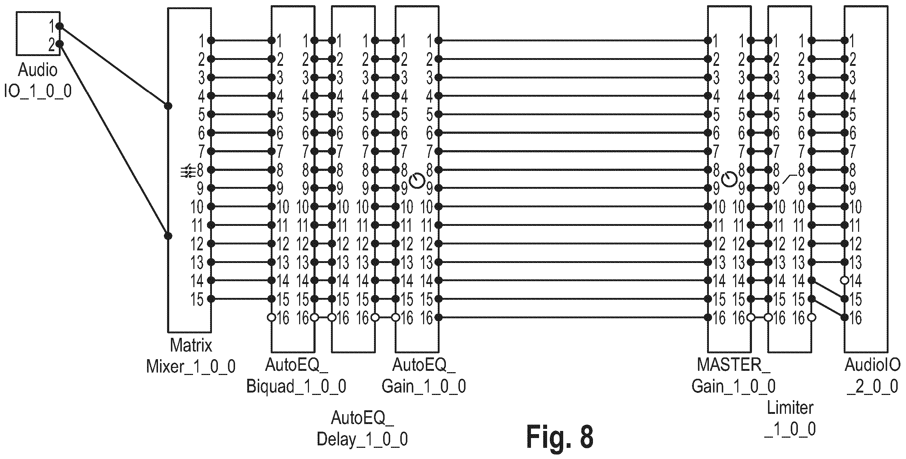

In a system according to embodiments of the present disclosure, the tuning function can be embedded in a larger software architecture including additional features or technologies. In an embodiment, this is achieved by a signal flow tool, with which the user can implement more complex signal flows and software architectures in the form of multiple audio objects (gains, delays, complex algorithms etc.). Such audio objects are also referred to as audio components in the present disclosure. The signal flows can run on target processors, for example, and be tested in real time in a PC environment, for example. Audio blocks required for the tuning, e.g., equalizer (EQ) blocks, gain blocks, delay blocks, can be created in or as part of the signal flow. An example is illustrated in Figure 8. The signal flow integration engine 13 can be configured to write the tuning results, represented by the tuning parameters output by the automatic tuning engine 12, directly into these blocks. The signal flow can then be analyzed in real time, listened to by a user, and/or loaded onto a target processor, such as a head unit or audio amplifier in automotive applications.

### Evaluation/Validation

A system according to embodiments of the present disclosure provides an integrated signal flow, wherein the tuning can be applied to audio playback signals. Depending on the user's preferences, the playback can be used for a re-measurement, for an objective evaluation of the tuning, or for a subjective assessment of the tuning performance, for example by listening. Based on the evaluation, the user can further adjust the tuning parameters according to their specific preferences using the integrated signal flow and audio object control tools, e.g., user interface panels and real-time analyzers, or adjust the configuration to go back to automatic tuning engineer for re-tuning

### Manual fine tuning

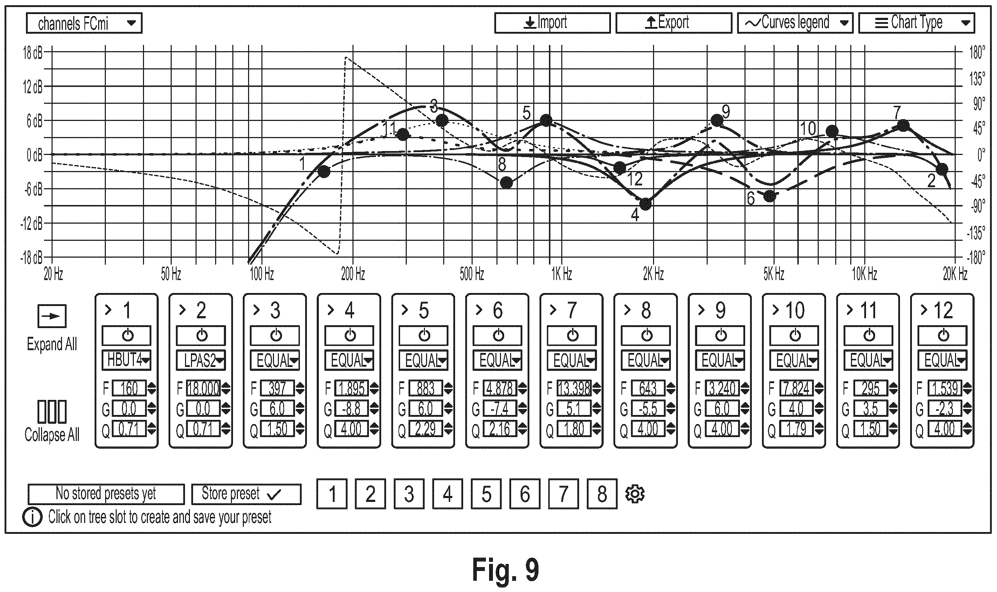

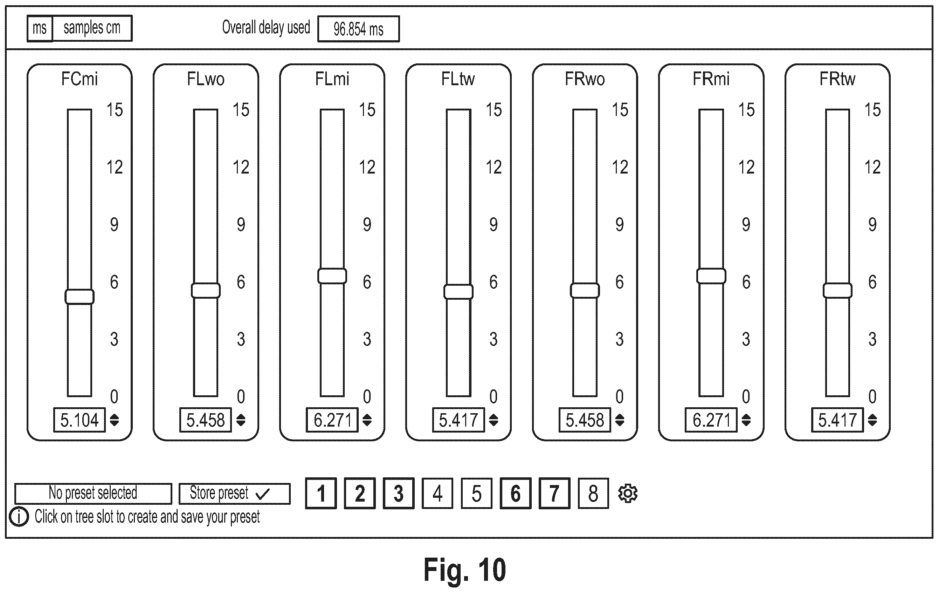

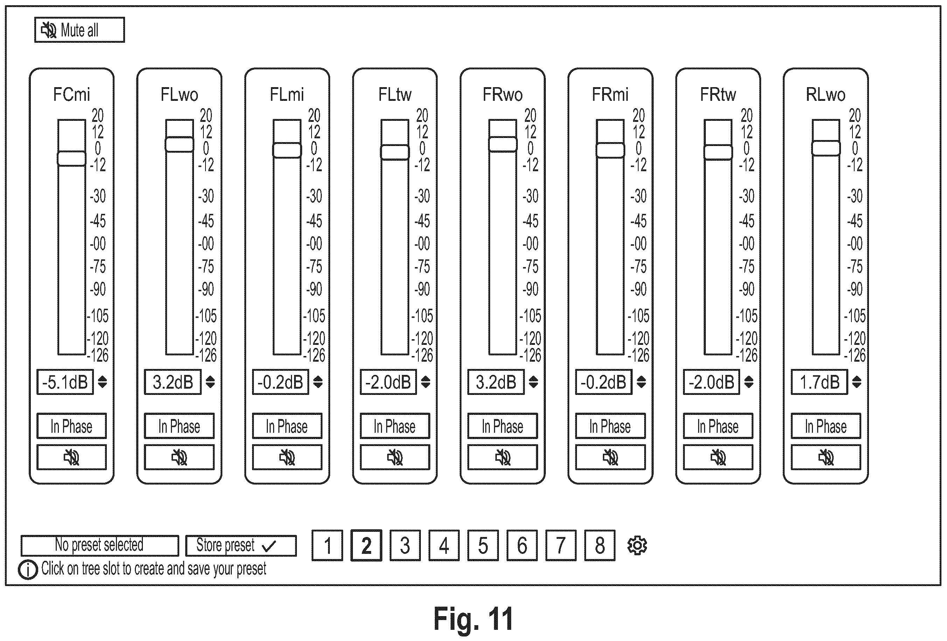

In a system according to embodiments of the present disclosure, the tuning results may be made fully visible in the signal flow. Based on the subjective/objective evaluation, the user has straight access to the tuning parameters and can modify them for fine-tuning. Figures 9, 10 and 11 illustrate the filter (IIR biquad filter), delay and gain panels respectively, together with the tuning results, which can be modified further by the user.

Accordingly, the described system provides an end-to-end tool, which contains all aspects needed for baseline tuning: measurement, tuning, signal flow integration and evaluation. It also enables manual fine tuning based on the baseline tuning. In particular, the system may include or provide the following features and technical advantages:
- Measurement
   ∘ Flexible selection and configuration of loudspeaker types and layouts.
   ∘ Synchronous and asynchronous modes of measurements to derive impulse responses and other signal representations, including direct recording.
   ∘ Measurement validation to cross-check SNR, THD and polarity.
- Automatic tuning
   ∘ Flexible and extendable configurations to meet different users' preferences.
   ∘ Balance between different seats.
   ∘ Fast and consistent tuning.
- Signal flow integration
   ∘ Tuning results are directly integrated in the signal flow and can be immediately sent to processors and loudspeakers.
   ∘ The signal flow can be deployed on any hardware.
- Validation
   ∘ Objective: By integrating the tuning parameters in the signal flow, re-measurements can be performed to validate if the target is achieved.
   ∘ Subjective: The signal flow integration enables real-time listening with the tuning applied to music.
- Manual fine tuning
   ∘ The tuning parameters are fully transparent, which enables the users to perform manual fine tuning based on the baseline tuning results.
- Flexible re-tuning
   ∘ Judging from subjective and/or objective evaluation, automatic tuning can be retriggered for re-tuning.
   ∘ Judging from the fine tuning results, automatic tuning can be retriggered for re-tuning.

The described system provides a platform to automatically tune an audio system, implementing a full tuning chain including measurement, tuning, signal flow integration and evaluation. Compared to manual baseline tuning, the system delivers faster and more consistent results and therefore is more efficient in terms of time and cost. The system enables more consistent tuning results across different cars or other environments. In addition, the automatic tuning can balance the tuning across multiple seats. The user interface enables flexible and extendible configurations and targets that the user can manipulate and select. Subjective and objective evaluations are enabled, and the audio can be re-tuned and/or manually fine-tuned according to the user's requirements.

The described system can be applied in various environments, for example in vehicles, home theatres and studios.

## Claims

1. An automatic audio tuning system, the system comprising:
a measurement engine to obtain first measurements of one or more parameters associated with an audio signal from one or more loudspeakers;
an automatic tuning engine to receive the first measurements and to generate tuning parameters based on the first measurements;
a signal flow integration engine to receive the tuning parameters and to generate one or more components of a signal flow, wherein each of the one or more components of the signal flow represents an audio parameter that is tuneable based on the tuning parameters;
an audio signal processing engine to receive the one or more components of the signal flow, and to generate a playback audio signal based on the one or more components of the signal flow; and
an evaluation engine to enable an evaluation of the playback audio signal.

2. The system of claim 1, wherein said tuning parameters represent one or more of a filter parameter, a temporal parameter, a spectral parameter, a gain, a delay, and an EQ parameter.

3. The system of claim 1 or 2, wherein the evaluation engine is configured to obtain second measurements based on the playback audio signal, and/or wherein the evaluation engine is configured to enable a manual or automatic verification and/or adjustment of the tuning parameters.

4. The system of any preceding claim, further comprising a user interface configured to enable a user to adjust one or more tuning parameters, wherein the signal flow integration engine is configured to adjust said one or more components of the signal flow based on the user-adjusted tuning parameters.

5. The system of claim 4, wherein the tuning parameters include one or more of a filter parameter, a temporal parameter, a spectral parameter, a gain, a delay, and an EQ parameter.

6. The system of any preceding claim, further comprising a user interface configured to enable a user to define a target curve in the frequency domain, wherein the automatic tuning engine is configured to generate the tuning parameters based on the target curve.

7. The system of any preceding claim, further comprising a user interface configured to enable a user to define a configuration of one or more seats in a vehicle in which the playback audio signal is to be played back, and/or to associate a weight to each of the seats, wherein the automatic tuning engine is configured to generate the tuning parameters based on the user-defined configuration and/or weights.

8. The system of any preceding claim, wherein the system is configured to determine the distances of the loudspeakers from one another and/or from a reference point by detecting delays in impulse responses of the loudspeakers, wherein the system further comprises a user interface configured to enable a user to select one of the loudspeakers as a reference, and to define delay offsets for the other loudspeakers, wherein the automatic tuning engine is configured to generate the tuning parameters based on the selected loudspeaker and user-defined delay offsets.

9. The system of any preceding claim, wherein the system comprises a user interface configured to enable a user to group loudspeakers within one or more regions, and to define relative level offsets, and wherein the automatic tuning engine is configured to perform gain alignment towards a user-defined target curve among loudspeakers within one of said regions and/or among said regions.

10. The system of any preceding claim, wherein the system is operable in a symmetric mode and/or an asymmetric mode, wherein in the symmetric mode, the automatic tuning engine is configured to combine the measured responses of left and right paired loudspeaker signals with respect to a seat of a vehicle in which the playback audio signal is to be played back, and wherein in the asymmetric mode, the automatic tuning engine is configured to process said measurements from a speaker at the position of one selected seat of the vehicle in which the playback audio signal is to be played back, wherein the automatic tuning engine is configured to generate the tuning parameters based on a selection of the symmetric mode or the asymmetric mode.

11. The system of any preceding claim, wherein generating the tuning parameters by the automatic tuning engine comprises generating biquad parameters, delays and gains to equalize a measured response with respect to a user-defined target curve.

12. The system of any preceding claim, wherein the measurement engine is configured to measure one or of the following audio parameters: impulse response, THD, phase, frequency, SNR, polarity, and/or, wherein the measurement engine is operable to perform synchronous and asynchronous measurements of said audio parameters.

13. The system of any preceding claim, further comprising one or more microphones or a microphone array to perform said measurements, wherein the microphones and/or the microphone array are configurable to perform measurements in respect of different types and/or layouts of loudspeakers.

14. The system of any preceding claim, wherein the system is implemented by instructions executable on a computer, and/or wherein the system is implemented in an automotive vehicle, and preferably wherein the system is connected to or part of an in-vehicle audio system.

15. A method for tuning an audio signal, the method comprising:
measuring one or more parameters associated with an audio signal from one or more loudspeakers;
generating tuning parameters based on the measured parameters;
generating one or more components of a signal flow, wherein each of the one or more components of the signal flow represents an audio parameter that is tuneable based on the tuning parameters;
generating a playback audio signal based on the one or more components of the signal flow; and
evaluating the playback audio signal and, optionally, adjusting the tuning parameters based on the evaluation.
